# EUROPÄISCHE PATENTSCHRIFT

(11) **EP 1 138 966 B1**
(45) Veröffentlichungstag und Bekanntmachung des Hinweises auf die Patenterteilung: **12.07.2006**
(21) Anmeldenummer: 00106602.6
(22) Anmeldetag: 28.03.2000
(51) Int. Cl.: F16D 1/02, F03D 1/06

(54) **Windkraftanlage**
Wind power plant
Installation éolienne

(43) Veröffentlichungstag der Anmeldung: 04.10.2001
(73) Patentinhaber: GENERAL ELECTRIC COMPANY, Schenectady, NY 12345 (US)
(72) Erfinder: Weitkamp, Roland, 49191 Belm (DE)
(74) Vertreter: Hilleringmann, Jochen

(56) Entgegenhaltungen:
- CH-A- 614 503
- DE-A- 3 617 983
- US-A- 1 512 966
- US-A- 4 028 909
- US-A- 4 353 681

## Beschreibung

Die Erfindung betrifft eine Windkraftanlage, die eine neue Verbindung der vom Rotor angetriebenen Antriebswelle mit der Getriebewelle aufweist.

Bei Windkraftanlagen treibt der Rotor eine Antriebswelle an (Hauptantriebswelle), die mit der Eingangswelle eines Getriebes gekoppelt ist, dessen ausgangsseitige Welle mit dem Generator verbunden ist. Um die einzelnen Komponenten einer Windkraftanlage im Bedarfsfalle austauschen zu können, ist es wünschenswert, dass sich die mechanischen Verbindungen auf einfache Weise und möglichst unkompliziert lösen lassen. Dies gilt insbesondere für die Verbindung zwischen der vom Rotor angetriebenen Antriebswelle und der eingangsseitig des Getriebes angeordneten Getriebewelle. Im Stand der Technik ist es bisher üblich, diese Verbindung durch Spannsätze oder verschraubte Ringflansche mit gegebenenfalls zusätzlicher Verstiftung zu realisieren. Das Problem bei Spannsätzen besteht darin, dass diese sich festziehen und nur schwer lösbar sind, während die Verbindung durch verschraubte Flansche mitunter mit Platzproblemen verbunden ist. Auch die Verstiftung keilt sich im Laufe der Zeit fest, ist also nur mit großem Aufwand wieder zu lösen. Da die Wartungs- und Reparaturkosten insbesondere auch durch die Zeitdauer für Ein- und Ausbau der Komponenten bestimmt ist, ist es also wünschenswert, den Zeitaufwand für das Trennen und Verbinden der einzelnen Komponenten zu verkürzen.

Aus US-A-4 353 681 ist eine Windenergieanlage bekannt, bei der der Rotor um eine quer zur hohlen Antriebswelle verlaufende Drehachse schwenkbar an der Antriebswelle gelagert ist.

Aus US-A-4 028 909, US-A-1 512 966, DE-A-36 17 983 und CH-A-614 503 sind Passfederverbindungen zwischen Antriebswelle bekannt.

Der Erfindung liegt die Aufgabe zu Grunde, eine Windkraftanlage zu schaffen, die über eine im Hinblick auf die Verbindung der Antriebswelle mit der Getriebewelle sowie der Trennung dieser Verbindung vereinfachte Konstruktion verfügt.

Zur Lösung dieser Aufgabe wird mit der Erfindung eine Windkraftanlage vorgeschlagen, die versehen ist mit
- einem Turm,
- einem drehbar an dem Turm gelagerten Maschinengehäuse, das unter anderem eine hohle Antriebswelle und ein Getriebe mit einer mit der Antriebswelle lösbar verbindbaren Getriebewelle aufweist, und
- einem Rotor mit einer mit der Antriebswelle verbundenen Nabe und zwei diametral gegenüberliegenden und mit der Nabe verbindbaren Rotorblättern.

Diese Windkraftanlage ist erfindungsgemäß dadurch gekennzeichnet,
- dass die hohle Antriebswelle an ihrem der Nabe abgewandten getriebeseitigen Ende innerhalb zweier diametral gegenüberliegender und um 90° gegenüber den Rotorblättern versetzter Wandbereiche jeweils mindestens einen Aufnahmeraum zur Aufnahme eines Verbindungselements zur rotationskraftschlüssigen Verbindung der Antriebswelle mit der Getriebewelle aufweist und
- dass das der Antriebswelle zugewandte Ende der Getriebewelle bezüglich der Lage der Aufnahmeräume der Antriebswelle korrespondierende Aufnahmeräume für die Verbindungselemente aufweist, so dass sich im gekuppelten Zustand beider Wellen die Verbindungselemente durch jeweils zwei Aufnahmeräume der Wellen erstrecken.

Alternativ ist die Windkraftanlage dadurch gekennzeichnet, dass die Getriebe- und/oder die Antriebswelle die insbesondere integral ausgebildeten Verbindungselemente aufweist, die dann im gekuppelten Zustand in Aufnahmeräume der jeweils anderen Welle eingetaucht sind. Für die Anordnung der Aufnahmeräume und Verbindungselemente der Antriebswelle gilt das oben im Zusammenhang mit der Positionierung der Aufnahmeräume der Antriebswelle Gesagte.

Die erfindungsgemäße Verbindung zwischen der vom Rotor angetriebenen hohlen Antriebswelle und der eingangsseitig angeordneten Getriebewelle setzt einen Rotor mit zwei diametral gegenüberliegenden Rotorblättern (Zwei-Blatt-Rotor) voraus. Die Verbindung der Antriebswelle mit der Getriebewelle erfolgt erfindungsgemäß nämlich durch in Aufnahmeräume der Wandung der Welle eingebrachte Verbindungselemente, die an dem der Nabe abgewandten getriebeseitigen Ende der Antriebswelle angeordnet sind. Da die Aufnahmeräume in die Wandung der hohlen Antriebswelle eingebracht sind, wird die Wandung in diesem Bereich "geschwächt". Dennoch muss die hohle Antriebswelle die im Betrieb der Windkraftanlage über den Rotor auf sie einwirkenden Biegemomente aufnehmen. Die größten derartigen Biegemomente treten bei vertikal stehenden Rotorblättern auf, und zwar beispielsweise dann, wenn in diesem Zustand auf das obere Rotorblatt infolge des Winddrucks Kraft ausgeübt wird. Das bedeutet, dass die Wandung der Antriebswelle in denjenigen Quadranten, innerhalb derer die Rotorblätter von der Nabe abstehen, ausreichend dick sein muss. Befindet sich der Rotor hingegen in Horizontalstellung, so können in den nunmehr oben- und untenliegenden Quadrantenbereichen der Antriebswelle keine übermäßig großen Biegekräfte mehr auftreten, da hier maximal das Biegemoment aufgrund des Eigengewichts des Rotors für derartige Biegekräfte verantwortlich ist. Mit anderen Worten kann also die Wandung der Antriebswelle innerhalb der beiden außerhalb der Rotorblätter liegenden Quadranten entlang ihrer axialen Achse schwächer, d.h. dünnwandiger ausgebildet sein. Daher ist es möglich, bei einem Zwei-Blatt-Rotor die Verbindungselemente zur rotationskraftschlüssigen Verbindung der Antriebswelle mit der Getriebewelle in diesen weniger stark beanspruchten Wandbereichen der Antriebswelle anzuordnen. Mit anderen Worten befinden sich also die beiden diametral gegenüberliegend angeordneten Gruppen von Verbindungselementen um 90° versetzt zur Erstreckung der Rotorblätter.

Die erfindungsgemäße Verbindung von Antriebswelle und Getriebewelle durch sich in Aufnahmenräumen an den einander gegenüberliegenden Stirnseiten beider Wellen befindenden Verbindungselementen ist sehr montagefreundlich, da es zu keinerlei Verkeilungen und selbsttätigen Verklemmungen kommen kann. Die Verbindung muss ganz überwiegend für die Übertragung der Rotationskräfte der Antriebswelle auf die Getriebewelle ausgelegt sein (rotationskraftschlüssige Verbindung zur Übertragung der Torsionsmomente), wohingegen ein Kraftschluss in axialer Richtung über Verschraubungen erfolgt, die auf dem verbleibenden Umfang der Welle angeordnet sind und die auch die hohen Biegemomente in den Quadranten der Rotorblätter auf die Getriebewelle übertragen.

Die Aufnahmeräume, von denen vorteilhafterweise pro Stirnflächenwelle zwei diametral gegenüberliegende Aufnahmeräumen vorgesehen sind, erstrecken sich vorteilhafterweise in axialer Richtung, sind also ausschließlich zur betreffenden Stirnfläche hin offen. Die Aufnahmeräume können nach Art von "Sacklochbohrungen", aber auch als durchgehende Aufnahmeräume ausgebildet sein. Zweckmäßigerweise befinden sich die Aufnahmeräume im Bereich von von der Innenseite der Hohlwelle vorstehenden Innenvorsprüngen, die lediglich am getriebeseitigen Ende der Antriebswelle ausgebildet sind. Ein solcher Vorsprung könnte also bei einem zweiseitig offenem axial verlaufenden Aufnahmeraum zum einen zur Stirnseite der Antriebswelle hin und zum anderen zum Innern der Antriebswelle hin offen sein.

Bei axialer Erstreckung der Aufnahmeräume sind die Verbindungselemente nach Art von Stiften, Bolzen, Passfedern o.dgl. ausgebildet, deren Querschnittsform gleich der Querschnittsform der Aufnahmeräume ist. Die Passung der Aufnahmeräume und der Verbindungselemente und insbesondere die Dimensionierung der Aufnahmeräume und Verbindungselemente sowie die Dimensionierung der Wandstärke der Antriebswelle im Bereich der Aufnahmeräume und die Dimensionierung der Getriebewelle sind derart aufeinander abgestimmt, dass die zu erwartenden Torsions- und Biegemomente von der Verbindung der beiden Wellen übertragen werden können.

Bei einer anderen vorteilhaften Weiterbildung der Erfindung sind die Aufnahmeräume nicht nur zu den stirnseitigen Enden der Wellen sondern auch in radialer Richtung zu ihren außenliegenden Außenmantelflächen hin offen. Bei aneinander anliegenden Enden der beiden Wellen und Ausrichtung ihrer Aussparungen entstehen dann radiale Aufnahmeräume, die sich beidseitig der radialen Kontaktebene der Stirnflächen beider Wellen erstrecken. In diese Aufnahmeräume lassen sich nun Einsatzteile (auch als Passfederelemente bezeichnet) einsetzen, deren Querschnittsform gleich der Querschnittsform der Aufnahmeräume ist. Die Einsatzteile sorgen dann für die rotationskraftschlüssige Verbindung zwischen Antriebswelle und Getriebewelle. Sie sind gegen ein unbeabsichtigtes Herausfallen aus den Aufnahmeräumen gesichert, wie dies bei Passfederverbindungen an sich bekannt ist.

Wie oben dargelegt, muss die Antriebswelle in ihren um 90° gegenüber den Rotorblättern versetzten Wandbereichen weniger große axiale Biegemomente aufnehmen. Zur Einsparung von Material und Gewicht ist es daher zweckmäßig, die Dicke der Wand in diesen Umfangsbereichen geringer als in den anderen Umfangsbereichen zu wählen. Insbesondere bietet sich eine Antriebswelle an, die eine im wesentlichen zylindrische Außenmantelfläche und eine im wesentlichen elliptische Innenmantelfläche aufweist. Der längste Durchmesser der Ellipse ist dabei um 90° gegenüber der Radialerstreckung der Rotorblätter angeordnet. In vorteilhafter Weiterbildung der Erfindung ist ferner vorgesehen, dass die Antriebswelle und die Nabe des Rotors integral ausgebildet sind. Die Antriebswelle und die Nabe sind also ein einteiliges (Guss-) Bauteil. Dies hat den Vorteil, dass auf eine mechanische Verbindung von Nabe und Antriebswelle verzichtet werden kann. Dabei ist zu beachten, dass damit auch korrosionsanfällige Wartungsstellen entfallen. Außerdem ist der Kraftfluss zwischen Nabe und Antriebswelle optimal. Schließlich verringert sich der Bearbeitungsaufwand an der Antriebswelle und an der Nabe, da diese nun nicht mehr zur Verbindung beider Teile speziell bearbeitete Berührungsflächen mit Bohrungen u.dgl. aufweisen.

Bei einteiliger Ausbildung von Nabe und Welle weist die Nabe diametral gegenüberliegende Öffnungen für die Anordnung der Rotorblätter und der Rotorblattverstellantriebe auf, wobei die Ränder dieser Öffnungen zweckmäßigerweise radial über die Außenmantelfläche der Antriebswelle überstehen. Hinter dem "Nabenteil" der Antriebswelle weist diese bis zu ihrem getriebeseitigen Ende einen gleich bleibenden bzw. leicht sich verringernden Außendurchmesser auf. Eine derartige einteilige Antriebswellen-Naben-Konstruktion lässt sich von der Vorderseite des Maschinengehäuses durch das dort angeordnete ringförmige Antriebswellenlager hindurchschieben. An einem derartigen Ringlager zur Lagerung der Antriebswelle kann also auch bei einteiliger Ausbildung von Antriebswelle und Rotornabe festgehalten werden.

Je nach Größe (Innendurchmesser) der Antriebswelle ist es von Vorteil, wenn die Nabe anstatt durch eine Öffnung in der Nabe selbst über die Antriebswelle begehbar ist. Die Antriebswelle müsste also über ein radiales Mannloch verfügen. Dies ist bei der für die erfindungsgemäße Verbindung von Antriebswelle und Getriebewelle ausgelegte Antriebswelle möglich, indem innerhalb eines um 90° gegenüber den Rotorblättern versetzten Umfangsbereich der Wandung der Antriebswelle diese mit einem Mannloch versehen wird. Denn in diesen Bereichen muss die Antriebswelle geringeren axialen Biegemomenten standhalten als in den hierzu um 90° verdreht angeordneten Wandbereichen (s. oben). Der Vorteil der Begehung der Nabe über die hohle Antriebswelle ist insbesondere in der nunmehr einfacheren und risikoloseren Zugänglichkeit zu sehen, da man nicht mehr notwendigerweise über eine in der Stirnfläche der Nabe angeordnete Öffnung sondern über eine innerhalb des Maschinengehäuses befindliche Mannlochöffnung der Antriebswelle in die Nabe gelangt.

Die Nabe des Rotors einer Windkraftanlage ist im allgemeinen mit Stellantrieben für die Rotorblattverstellung sowie Schaltschränken und Akkumulatoren ausgestattet. Diese Komponenten sind in der Nabe jahreszeitabhängig starken Temperaturschwankungen ausgesetzt. Insbesondere tiefe Temperaturen verringern das Leistungsvermögen der Akkumulatoren. Vorteilhaft insoweit ist es, wenn die Akkumulatoren und die Schaltschränke innerhalb des Maschinengehäuses angeordnet werden können, da in dem Maschinengehäuse wegen der Eigenerwärmung der einzelnen Komponenten auch in der kalten Jahreszeit angenehme Temperaturen herrschen. Bei einer Weiterbildung der Erfindung ist daher vorgesehen, Teile der (elektrischen oder hydraulischen) Blattverstelleinrichtungen (z.B. die Akkumulatoren und Schaltschränke) in der Hohlwelle oder außen auf der hohlen Antriebswelle anzuordnen und im letztgenannten Fall die Kabelverbindung durch radiale Öffnungen in der Antriebswelle zu führen, wobei diese Öffnungen wiederum in den für geringere Biegemomente auszulegenden Wandbereiche der Antriebswelle angeordnet sind.

Nachfolgend werden anhand der Figuren zwei Ausführungsbeispiele der Erfindung näher erläutert. Im einzelnen zeigen:
- Fig. 1: in Seitenansicht den oberen Teil einer Windkraftanlage mit Maschinengehäuse und Rotor,
- Fig. 2: einen Längsschnitt durch eine Antriebswelle mit integraler Nabe gemäß einem ersten Ausführungsbeispiel der Erfindung,
- Fign. 3 und 4: Querschnitts- bzw. Endansichten der Welle gemäß Fig. 2 entlang der Linien III-III bzw. in Richtung des Pfeils IV der Fig. 2,
- Fig. 5: eine Seitenansicht einer Antriebswelle mit einteiliger Nabe gemäß einem zweiten Ausführungsbeispiel der Erfindung und
- Fig. 6: einen Schnitt entlang der Linie VI-VI der Fig. 5 zur Verdeutlichung der bei diesem Ausführungsbeispiel gewählten Passfederverbindung zwischen Antriebswelle und Getriebewelle.

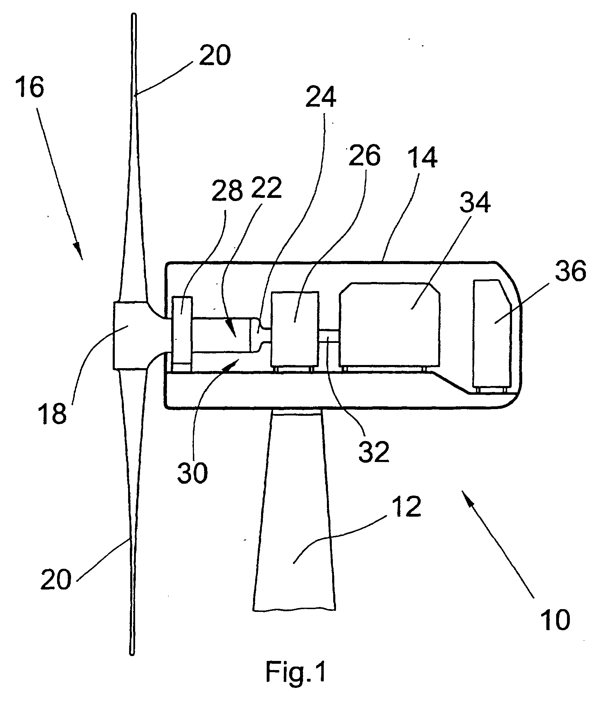

In Fig. 1 ist der obere Teil einer Windkraftanlage 10 dargestellt, die einen Mast oder Turm 12 mit einem auf diesem drehbar gelagerten Maschinengehäuse 14 aufweist. An einem Ende des Maschinengehäuses 14 befindet sich ein Zwei-Blatt-Rotor 16 mit einer Nabe 18 und zwei diametral gegenüberliegend angeordneten Rotorblättern 20. Der Rotor 16 ist mit einer Antriebswelle 22 verbunden, die ihrerseits mit der eingangsseitigen Welle 24 eines Getriebes 26 gekoppelt ist. Ferner ist die Antriebswelle 22 durch ein Wellenlager 28 an ihrem nabenseitigen Ende in dem Maschinengehäuse 14 drehbar gelagert; an ihrem getriebeseitigen Ende 30 ist die Antriebswelle 22 über ihre Kupplung mit der eingangsseitigen Getriebewelle 24 und die Lagerung des Getriebes 26 im Maschinengehäuse 14 gelagert. Am Ausgang des Getriebes 26 befindet sich eine ausgangsseitige Welle 32, die mit einem Generator 34 gekoppelt ist. Ferner befindet sich im Maschinengehäuse 14 noch ein Schaltschrank 36 sowie andere hier nicht näher beschriebene, bei Windkraftanlagen aber übliche Komponenten.

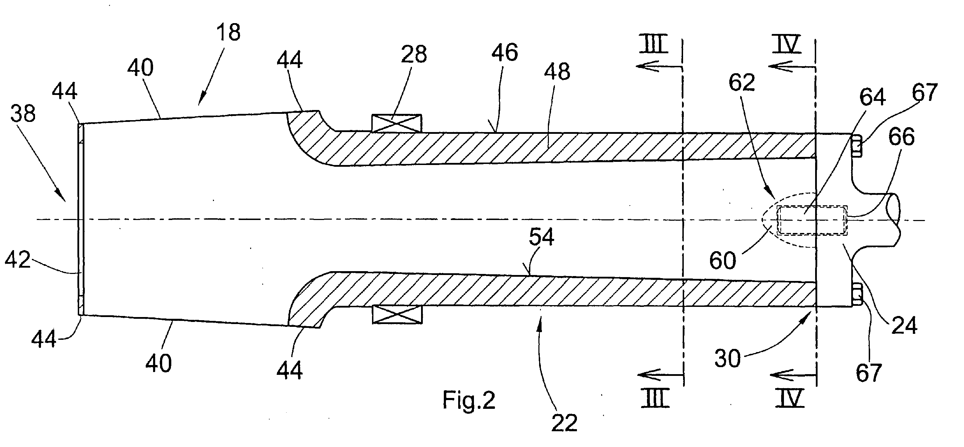

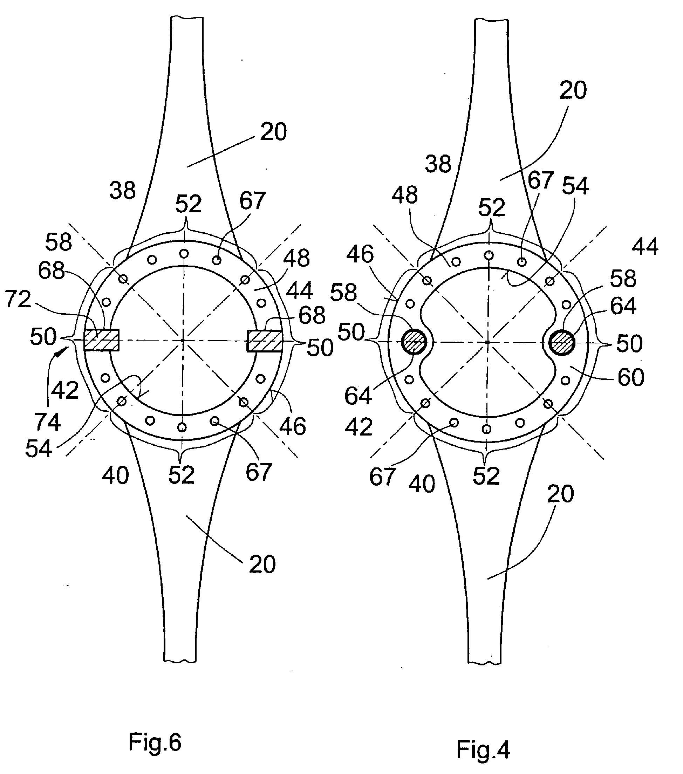

Der Aufbau der Welle 22 wird nachfolgend anhand der Fign. 2 bis 4 näher erläutert. Fig. 4 zeigt dabei eine Ansicht auf das getriebeseitige Ende 30 der Antriebswelle 22 entsprechend der Linie IV-IV der Fig. 2. Zu erkennen ist, dass die beiden Rotorblätter 20 diametral gegenüberliegend angeordnet sind und sich bei gedanklicher Aufteilung der Antriebswelle 22 in vier Quadranten 38,40,42,44 innerhalb der beiden einander gegenüberliegenden Quadranten 38,40 befinden.

Wie man anhand von Fig. 2 erkennen kann, sind die Antriebswelle 22 und die Nabe 18 einstückig miteinander ausgebildet. Bei der Antriebswelle 22 handelt es sich um ein Gussteil, das ein die Nabe 18 bildendes vorderes Ende 38 aufweist, welches im wesentlichen diametral gegenüberliegende radiale Öffnungen 40 sowie eine stirnseitige Öffnung 42 aufweist. In den im wesentlichen radialen Öffnungen 40 befinden sich Blattverstellantriebe und die Drehlager für die Rotorblätter, während die stirnseitige Öffnung 42 der Begehbarkeit der Nabe 18 dient. Diese Öffnung 42 ist bei betriebsbereiter Windkraftanlage 10 durch einen (nicht dargestellten) Deckel verschlossen. Die Ränder 44 der Öffnungen 40 stehen über die Außenmantelfläche 46 der Antriebswelle 22 über.

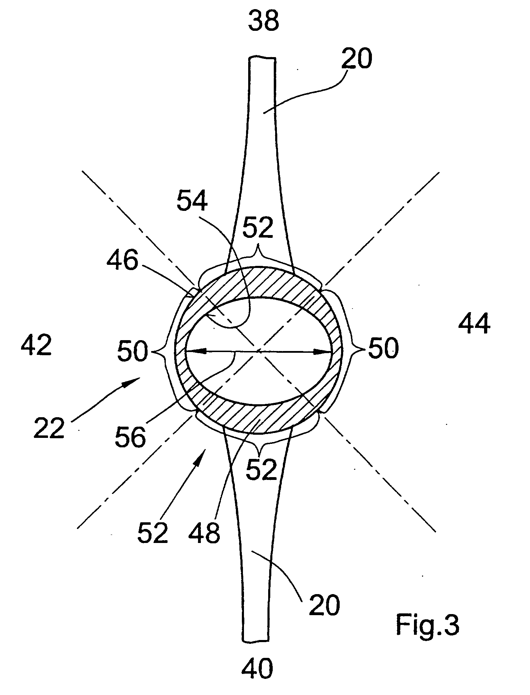

Die Außenmantelfläche 46 ist im wesentlichen zylindrisch (siehe auch Fig. 3) und weist eine Wandung 48 auf, deren Dicke innerhalb der in den Quadranten 42 und 44 liegenden Wandbereiche 50 geringer ist als innerhalb der Wandbereiche 52 der Quadranten 38 und 40. Dies wird bei dem hier beschriebenen Ausführungsbeispiel dadurch realisiert, dass die Innenmantelfläche 54 der Antriebswelle 22 elliptisch ist, wobei die Ellipse derart ausgerichtet ist, dass ihr größter Durchmesser 56 quer zur Erstreckung der Rotorblätter 20 verläuft. Durch diese Art der Ausgestaltung der Wandung 48 der Antriebswelle 22 können Material eingespart und das Gewicht reduziert werden. Die Wanddickenabnahme in den Quadranten 42 und 44 ist deshalb tolerabel, da die entsprechenden Wandbereiche 50 der Antriebswelle 22 für die Aufnahme geringerer Biegemomente ausgebildet sein muss, als die Wandbereiche 52 in den Quadranten 38 und 40, in denen auch die Rotorblätter 20 angeordnet sind. Denn die höchsten Biegemomente können dann auf die Antriebswelle 22 einwirken, wenn der Rotor 16 vertikal ausgerichtet ist. Wirken in dieser Situation auf die beiden Rotorblätter 20 unterschiedliche Windkräfte ein, so muss die Antriebswelle 22 in vertikaler Ebene, d.h. in der Ebene, in der auch die Längsachsen der Rotorblätter 20 verlaufen, biegesteif sein, weshalb die Wandbereiche 52 stärker ausgebildet sind. Dahingegen sind die auf die Antriebswelle 22 wirkenden Biegemomente bei horizontal stehendem Rotor 16 im wesentlichen nur durch das Eigengewicht des Rotors 16 bestimmt. Selbstverständlich muss auch die Antriebswelle 22 in dieser Situation in vertikaler Ebene biegesteif sein, wird aber längst nicht den Belastungen ausgesetzt wie bei vertikal stehendem Rotor 16. Von daher können die bei horizontalem Rotor 16 oben und unten angeordneten Wandbereiche 50 dünnwandiger ausgebildet sein.

Die Erkenntnis, dass die Wandung 48 der Antriebswelle 22 innerhalb verschiedener Quadranten unterschiedlich stark sein kann, ohne dass die Axialbiegesteifigkeit der Antriebswelle 22 in der kritischen Vertikalstellung des Rotors 16 leidet, kann auch zur Verbindung/mechanischen Kopplung von Antriebswelle 22 und Getriebewelle 24 ausgenutzt werden. In dem hier beschriebenen Ausführungsbeispiel weisen die gemäß obiger Erläuterung dünnwandiger auszubildenden Wandbereiche 50 axiale zylindrische Aufnahmeräume 58 auf, wobei jeweils ein derartiger Aufnahmeraum 58 in jeweils einem Wandbereich 50 angeordnet ist. Die beiden Aufnahmeräume 58, die zur Stirnfläche 60 am getriebeseitigen Ende 30 der Antriebswelle 22 hin offen sind, liegen also diametral gegenüber und sind in nach innen vorspringenden Innenvorsprungsbereichen 60 der Wandung 48 angeordnet. Diese Vorsprungsbereiche 60 verlaufen über lediglich eine kurze axiale Erstreckung an der Innenmantelfläche 54 der Antriebswelle 22 (siehe auch Fig. 2). In die Aufnahmeräume 58 sind Verbindungselemente 62 in Form von zylindrischen Bolzen 64 eingepasst, die aus den Aufnahmeräumen 58 axial herausragen und in korrespondierende Aufnahmeräume 66 der Getriebewelle 24 eintauchen. Durch diese Axialzapfenverbindung kommt es zu einer rotationskraftschlüssigen Verbindung der Antriebswelle 22 mit der Getriebewelle 24. Diese Art der Zapfenverbindung lässt sich, da sie nicht selbstverkeilend bzw. selbstklemmend ist, jederzeit durch geeignete Abziehwerkzeuge lösen. Damit ist ein montagefreundlicher Austausch der Antriebswelle 22 bzw. des Getriebes 26 der Windkraftanlage 10 gegeben. Zusätzlich zu dieser Verbindung sind eine Vielzahl von Schrauben 67 vorgesehen, die entlang des Umfangs von Hohl- und Getriebewelle 22,24 angeordnet sind (siehe auch Fig. 4) und der Aufnahme von Biegemomenten in den Quadranten 38,40 der Rotorblätter 20 dienen.

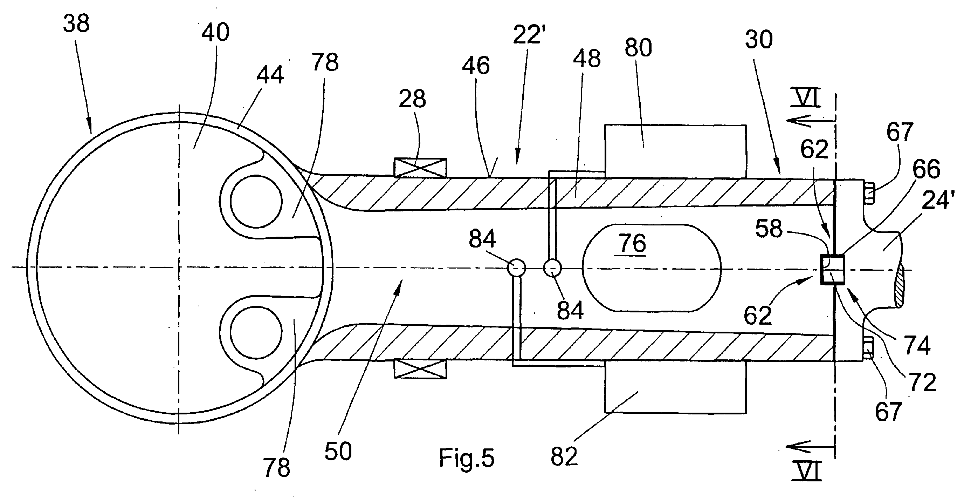

Eine zur Zapfenverbindung der Welle 22 der Windkraftanlage 10 gemäß den Fign. 1 bis 4 alternative Ausgestaltung der mechanischen Kopplung von Antriebswelle und Getriebewelle ist in den Fign. 5 und 6 gezeigt. Soweit die dort dargestellten Teile und Bereiche der Welle 22' konstruktions- bzw. funktionsgleich mit den Teilen und Bereichen der Antriebswelle 22 gemäß den Fign. 1 bis 4 sind, sind sie mit den gleichen Bezugszeichen versehen.

Im Unterschied zur Kopplung der Welle 22 mit der Getriebewelle 24 gemäß den Fign. 1 bis 4 sind im Ausführungsbeispiel der Fign. 5 und 6 diese beiden Wellen 22',24' durch eine Passfederverbindung miteinander gekoppelt. In die einander gegenüberliegenden Enden der beiden Wellen 22',24' sind Aufnahmeräume 58,66 eingearbeitet, die wiederum um 90° versetzt zu der Anordnung der Rotorblätter 20 positioniert sind. Diese Aufnahmeräume 58 sind sowohl zu den Stirnflächen als auch zu den Radialflächen der Wellen 22',24' hin offen. In der Draufsicht von der Seite gemäß Fig. 5 weisen die Aufnahmeräume 58,66 jeweils eine rechteckige Gestalt auf und liegt einander gegenüber. In die von einem Paar von Aufnahmeräumen 58,66 gebildete radiale Aussparung 68 ist ein Verbindungselement 70 in Form eines Einsatzteils 72 eingesetzt. Damit sind die beiden Wellen 22',24' nach Art einer Passfederverbindung miteinander gekoppelt. Gemäß Fig. 6 existieren entlang des Umfangs zwei derartige diametral gegenüberliegende Passverbindungsstellen 74, die in den Quadranten 42 und 44, also in denjenigen Wandbereichen 50 der Welle 22' angeordnet sind, die im Hinblick auf Biegemomente weniger stark beansprucht sind als die übrigen Wandbereich.

Anhand des Ausführungsbeispiels der Antriebswelle 22' gemäß den Fign. 5 und 6 soll nachfolgend noch auf weitere Besonderheiten eingegangen werden, die sowohl bei der Antriebswelle 22' als auch bei der Antriebswelle 22 der Fign. 1 bis 4 realisierbar sind. So ist in der Seitenansicht gemäß Fig. 5 erkennbar, dass in der Wandung 48 der Antriebswelle 22' in einem der Bereiche 50 eine Durchgangsöffnung 76 ausgebildet ist, durch die man in das Innere der Antriebswelle 22' gelangen kann. Wenn die Antriebswelle 22 bzw. 22' über einen entsprechend großen Innendurchmesser verfügt, ist damit die "Innenbegehung" der Antriebswelle möglich, ohne dass man dazu, wie bisher erforderlich, durch eine in der Stirnseite der Nabe 18 ausgebildete Öffnung klettern muss.

Darüber hinaus ist es möglich, die Steuerung und Energieversorgung für die (nicht gezeigten) Blattverstellantriebe, die an einstückig mit der Nabe 18 ausgebildeten Aufnahmen 78 befestigt sind, an der Antriebswelle 22 bzw. 22' zu lagern. Hier ist es möglich, die Steuereinheit 80 und die Energieversorgung (Akkumulatoren) 82 beispielsweise an der Außenmantelfläche 46 zu positionieren. Die Verdrahtung erfolgt dann vorteilhafterweise durch radiale Durchführungslöcher 84, die wiederum in einem der beiden bezüglich der Biegemomente weniger beanspruchten Wandbereichen 50 der Antriebswelle 22 bzw. 22' ausgebildet sind. Es ist aber auch möglich, die Steuereinheit 80 und die Energieversorgungseinheit 82 im Innern der Antriebswelle 22,22' unterzubringen.

## Patentansprüche

1. Windkraftanlage mit
- einem Turm (12),
- einem drehbar an dem Turm (12) gelagerten Maschinengehäuse (14), das unter anderem eine hohle Antriebswelle (22,22') und ein Getriebe (26) mit einer mit der Antriebswelle (22,22') lösbar verbindbaren Getriebewelle (24,24') aufweist, und
- einem Rotor (16) mit einer mit der Antriebswelle (22,22') verbundenen Nabe (18) und zwei diametral gegenüberliegenden und mit der Nabe (18) verbindbaren Rotorblättern (20),
**dadurch gekennzeichnet,**
- **dass** die hohle Antriebswelle (22,22') an ihrem der Nabe (18) abgewandten getriebeseitigen Ende (30) innerhalb zweier diametral gegenüberliegender und um 90° gegenüber den Rotorblättern (20) versetzter Wandbereiche (50) jeweils mindestens einen Aufnahmeraum (58) zur Aufnahme eines Verbindungselements (62) zur rotationskraftschlüssigen Verbindung der Antriebswelle (22,22') mit der Getriebewelle (24,24') aufweist und
- **dass** das der Antriebswelle (22,22') zugewandte Ende der Getriebewelle (24,24') bezüglich der Lage der Aufnahmeräume (58) der Antriebswelle (22,22') korrespondierende Aufnahmeräume (66) für die Verbindungselemente (62) aufweist.

2. Windkraftanlage nach Anspruch 1, **dadurch gekennzeichnet, dass** die Verbindungselemente (62) mit der Antriebswelle (22,22') und/oder mit der Getriebewelle (24,24') einstückig ausgebildet sind und zum Eintauchen in einen zugehörigen Aufnahmeraum (58,66) der Antriebswelle (22,22') bzw. der Getriebewelle (24,24') vorgesehen sind.

3. Windkraftanlage nach Anspruch 1 oder 2, **dadurch gekennzeichnet, dass** die Aufnahmeräume (58,66) der Antriebswelle (22,22') und der Getriebewelle (24,24') zu den einander gegenüberliegenden Stirnflächen (60) der Wellen (22,22',24,24') hin offen sind.

4. Windkraftanlage nach Anspruch 3, **dadurch gekennzeichnet, dass** die Aufnahmeräume (58,66) zylindrisch und die Verbindungselemente (62) Zylinderbolzen (64) sind.

5. Windkraftanlage nach Anspruch 3, **dadurch gekennzeichnet, dass** die Aufnahmeräume (58,66) auch zu den Außenmantelflächen (46) der Wellen (22,22',24,24') hin offen sind.

6. Windkraftanlage nach Anspruch 5, **dadurch gekennzeichnet, dass** die Aufnahmeräume (58,66) der Wellen (22,22',24,24') als im Querschnitt rechteckige Aussparungen ausgebildet sind und **dass** die Verbindungselemente zur Querschnittsfläche zweier gegenüberliegender Aussparungen formgleiche Einsatzteile (72) sind.

7. Windkraftanlage nach einem der Ansprüche 1 bis 6, **dadurch gekennzeichnet, dass** die Dicke der Wandung (48) der hohlen Antriebswelle (22,22') innerhalb ihrer sich in axialer Richtung von den Aufnahmeräumen (58) zur Nabe (18) hin erstreckenden Wandbereichen (50) geringer ist als in den anderen Wandbereichen (52).

8. Windkraftanlage nach Anspruch 6, **dadurch gekennzeichnet, dass** die Wandung (48) der Antriebswelle (22,22') eine im wesentlichen zylindrische Außenmantelfläche (46) und eine im wesentlichen elliptische Innenmantelfläche (54) aufweist, wobei der längste Durchmesser (56) der Ellipse um 90° verdreht zur Radialerstreckung der Rotorblätter (20) angeordnet ist.

9. Windkraftanlage nach einem der Ansprüche 1 bis 8, **dadurch gekennzeichnet, dass** in der Wandung (48) der Antriebswelle (22') ein radiales Mannloch (76) zur Innenbegehung der Antriebswelle (22') ausgebildet ist und **dass** das Mannloch (76) quer zur Erstreckung der Rotorblätter (20) gerichtet ist.

10. Windkraftanlage nach einem der Ansprüche 1 bis 9, **dadurch gekennzeichnet, dass** die Nabe (18) des Rotors (16) integraler Bestandteil der Antriebswelle (22,22') ist und **dass** die Antriebswelle (22,22') an ihrem Nabenende zwei diametral gegenüberliegende Öffnungen (40) für die Anordnung der Rotorblätter (20) aufweist.

11. Windkraftanlage nach einem der Ansprüche 1 bis 10, **dadurch gekennzeichnet, dass** Komponenten (80,82) der Blattverstelleinrichtungen, insbesondere Energiespeicher und Steuereinrichtungen in der Hohlwelle (22) oder außen auf der Hohlwelle (22) angeordnet sind.

## Claims

1. A wind energy plant comprising
- a tower (12),
- an engine housing (14) rotatably supported at the tower (12), which comprises, among others, a hollow drive shaft (22, 22') and a transmission (26) with a gear shaft (24, 24') adapted to be removably connected with the drive shaft (22, 22'), and
- a rotor (16) having a hub (18) connected to the drive shaft (22, 22') and two diametrically opposite rotor blades (20) adapted to be connected to the hub (18),
**characterized in**
- **that**, within two diametrically opposite wall portions (50) offset by 90° with respect to the rotor blades (20), the hollow drive shaft (22, 22') has the transmission-side end (30) averted from the hub (18) provided with at least one receiving space (58), respectively, for accommodating a connector element (62) for the non-positive rotational connection of the drive shaft (22, 22') and the gear shaft (24, 24'), and
- **that** the end of the gear shaft (24, 24') facing the drive shaft (22, 22') has receiving spaces (66) for the connector elements (62), whose positions correspond to those of the receiving spaces (58) of the drive shaft (22, 22').

2. The wind energy plant of claim 1, **characterized in that** the connector elements (62) are formed integral with the drive shaft (22, 22') and/or the gear shaft (24, 24') and are provided for dipping into an associated receiving chamber (58, 66) of the drive shaft (22, 22') or the transmission shaft (24, 24').

3. The wind energy plant of claim 1 or 2, **characterized in that** the receiving spaces (58, 66) of the drive shaft (22, 22') and the gear shaft (24, 24') are open towards the mutually opposite end faces (60) of the shafts (22, 22', 24, 24').

4. The wind energy plant of claim 3, **characterized in that** the receiving spaces (58, 66) are cylindrical and the connector elements (62) are cylindrical bolts (64).

5. The wind energy plant of claim 3, **characterized in that** the receiving spaces (58, 66) are also open towards the outer shell surfaces (46) of the shafts (22, 22', 24, 24').

6. The wind energy plant of claim 5, **characterized in that** the receiving spaces (58, 66) of the shafts (22, 22', 24, 24') are configured as recesses of rectangular cross section, and that the connector elements are insert members (72) of a shape equal to the cross-sectional shape of two opposite recesses.

7. The wind energy plant of one of claims 1 to 6, **characterized in that** the thickness of the wall (48) of the hollow drive shaft (22, 22') is less in the wall portions (50) extending axially from the receiving spaces (58) to the hub (18) than in other wall portions (52).

8. The wind energy plant of claim 6, **characterized in that** the wall (48) of the drive shaft (22, 22') has a substantially cylindrical outer shell surface (46) and a substantially elliptical inner shell surface (54), the longest diameter (56) of the ellipse is arranged skewed by 90° with respect to the radial extension of the rotor blades (20).

9. The wind energy plant of one of claims 1 to 8, **characterized in that** a radial man hole (76) for interior access to the drive shaft (22') is formed in the wall (48) of the drive shaft (22') and that the man hole (76) is directed transverse to the extension of the rotor blades (20).

10. The wind energy plant of one of claims 1 to 9, **characterized in that** the hub (18) of the rotor (16) is an integral part of the drive shaft (22, 22') and that the hub end of the drive shaft (22, 22') has two diametrically opposite openings (40) for the arrangement of the rotor blades (20).

11. The wind energy plant of one of claims 1 to 10, **characterized in that** components (80, 82) of the blade adjusting means, in particular energy stores and control means, are provided in the hollow shaft (22) or on the outside of the hollow shaft (22).

## Revendications

1. Eolienne, comportant
- une tour (12),
- un carter de machine (14) monté tournant sur la tour (12), qui présente, entre autres, un arbre d'entraînement creux (22, 22') et un mécanisme (26) comportant un arbre de mécanisme (24, 24') pouvant être relié, de façon démontable, à l'arbre d'entraînement (22, 22'), et
- un rotor (16) comportant un moyeu (18) relié à l'arbre d'entraînement (22, 22') et deux pales de rotor (20) diamétralement opposées, pouvant être reliées au moyeu (18),
**caractérisée en ce que**
- l'arbre d'entraînement creux (22, 22') présente, à son extrémité (30) située du côté mécanisme, à l'opposé du moyeu (18), à l'intérieur de chacune de deux zones de paroi (50) diamétralement opposées et décalées de 90° par rapport aux pales de rotor (20), au moins un logement de réception (58) pour recevoir un élément de liaison (62) destiné à relier, avec engagement en rotation, l'arbre d'entraînement (22, 22') à l'arbre de mécanisme (24, 24'), et
- **en ce que** l'extrémité de l'arbre de mécanisme (24, 24') tournée vers l'arbre d'entraînement (22, 22') présente des logements de réception (66), correspondant à la position des logements de réception (58) de l'arbre d'entraînement (22, 22'), pour les éléments de liaison (62).

2. Eolienne suivant la revendication 1, **caractérisée en ce que** les éléments de liaison (62) sont réalisés en une seule pièce avec l'arbre d'entraînement (22, 22') et/ou avec l'arbre de mécanisme (24, 24') et sont prévus pour être enfoncés dans un logement de réception correspondant (58, 66) de l'arbre d'entraînement (22, 22') ou de l'arbre du mécanisme (24, 24').

3. Eolienne suivant la revendication 1 ou la revendication 2, **caractérisée en ce que** les logements de réception (58, 66) de l'arbre d'entraînement (22, 22') et de l'arbre de mécanisme (24, 24') sont ouverts en direction des surfaces frontales (60) des arbres (22, 22', 24, 24') qui leur font face.

4. Eolienne suivant la revendication 3, **caractérisée en ce que** les logements de réception (58, 66) sont cylindriques et **en ce que** les éléments de liaison (62) sont des tourillons cylindriques.

5. Eolienne suivant la revendication 3, **caractérisée en ce que** les logements de réception (58, 66) sont également ouverts en direction des surfaces des enveloppes extérieures (46) des arbres d'entraînement (22, 22', 24, 24').

6. Eolienne suivant la revendication 5, **caractérisée en ce que** les logements de réception (58, 66) des arbres (22, 22', 24, 24') sont réalisées sous la forme d'évidements de section rectangulaire, et **en ce que** les éléments de liaison sont des pièces d'insertion (72) de même forme que la surface de section des deux évidements situés en face l'un de l'autre.

7. Eolienne suivant l'une des revendications 1 à 6, **caractérisée en ce que** l'épaisseur de la paroi (48) de l'arbre d'entraînement creux (22, 22') est, à l'intérieur de ses zones de paroi (50) s'étendant vers le moyeu (18) dans la direction axiale des logements de réception (58), plus mince que dans les autres zones (52) de la paroi.

8. Eolienne suivant la revendication 6, **caractérisée en ce que** la paroi (48) de l'arbre d'entraînement (22, 22') présente une surface d'enveloppe extérieure (46) sensiblement cylindrique et une surface d'enveloppe intérieure (54) sensiblement elliptique, le plus grand diamètre (56) de l'ellipse étant disposé tourné de 90° par rapport à la direction radiale des pales de rotor (20).

9. Eolienne suivant l'une des revendications 1 à 8, **caractérisée en ce que**, dans la paroi (48) de l'arbre d'entraînement (22'), est réalisé un trou d'homme (76) radial pour accéder à l'intérieur de l'arbre creux (22'), et **en ce que** le trou d'homme (76) a une direction perpendiculaire à la direction des pales de rotor (20).

10. Eolienne suivant l'une des revendications 1 à 9, **caractérisée en ce que** le moyeu (18) du rotor (16) est une pièce constitutive intégrante de l'arbre d'entraînement (22, 22') et **en ce que** l'arbre d'entraînement (22, 22') présente, à son extrémité du moyeu, deux ouvertures (40) diamétralement opposées pour la mise en place des pales de rotor (20).

11. Eolienne suivant l'une des revendications 1 à 10, **caractérisée en ce que** des composants (80, 82) des dispositifs de réglage des pales, en particulier l'accumulateur d'énergie et les dispositifs de commande, sont disposés dans l'arbre creux (22), ou, en dehors, sur l'arbre creux (22).
